# DEMANDE DE BREVET EUROPEEN

(11) **EP 4 531 151 A1**
(43) Date de publication de la demande: **02.04.2025**
(21) Numéro de dépôt: 24203237.3
(22) Date de dépôt: 27.09.2024
(51) Int. Cl.: H01M 10/052, H01M 10/0562, H01M 10/0585, H01M 4/66, H01M 4/04

(54) **BATTERIE EN COUCHES SOLIDES, ET SON PROCEDE D'OBTENTION**

(30) Priorité: 29.09.2023 FR 2310451
(71) Demandeur: Commissariat à l'Energie Atomique et aux Energies Alternatives, 75015 Paris (FR)
(72) Inventeur: CELE, Jacopo, 38054 GRENOBLE (FR); OUKASSI, Sami, 38054 GRENOBLE (FR); BERT, Maude, 38054 GRENOBLE (FR); COLONNA, Jean-Philippe, 38054 GRENOBLE (FR)
(74) Mandataire: Gevers & Orès

(57) **Abrégé**

La présente invention concerne une batterie en couches solides et son procédé d'obtention.

## Description

La présente invention concerne une batterie en couches solides et son procédé d'obtention.

Les composants électroniques se retrouvent dans de nombreux appareils portables tels que les ordinateurs, les téléphones mobiles, les systèmes de localisation, les lecteurs optiques, les télécommandes, etc. L'un des inconvénients de ces appareils portables est la nécessité d'y inclure une alimentation électrique. Les appareils portables utilisent généralement des piles comme source d'énergie. Les piles doivent avoir une capacité suffisante pour alimenter l'appareil pendant au moins la durée d'utilisation de l'appareil. Une capacité de batterie suffisante peut se traduire par un bloc d'alimentation assez lourd et/ou volumineux par rapport au reste de l'appareil. Il est donc souhaitable de disposer de batteries plus petites et plus légères offrant une capacité de stockage d'énergie suffisante. D'autres dispositifs de stockage d'énergie, tels que les supercondensateurs, et des dispositifs de conversion d'énergie, comme par exemple les cellules photovoltaïques et les piles à combustible, constituent des alternatives aux batteries pour l'alimentation en énergie des appareils électroniques portables ou des applications électriques non portables, suivant les cas. Un autre inconvénient des piles conventionnelles est que certaines sont fabriquées à partir de matériaux potentiellement toxiques qui peuvent fuir et qui sont soumis à des réglementations gouvernementales. Il est donc nécessaire de fournir une source d'énergie électrique sûre, et rechargeable sur de nombreux cycles de charge/décharge.

Dans ce contexte a été développé un type particulier de dispositif de stockage d'énergie : les batteries à l'état solide, et notamment en couche mince.

Une batterie solide, également appelée batterie à électrolyte solide ou batterie tout solide désigne un type d'accumulateur électrique pour lequel l'électrolyte, placé entre l'anode et la cathode, est solide, sous forme d'une plaque de verre, par exemple en phosphate de lithium, ou de gel.

Ce type d'accumulateur est vu comme un remplaçant des accumulateurs lithium-ion, en raison notamment d'une densité énergétique supérieure, mais également d'une plage de température d'utilisation plus élevée : de -20 °C à plus de 100 °C contre de 15 °C à 35 °C, ainsi que d'un risque moindre d'embrasement ou d'explosion. En effet, dans une batterie, les ions positifs se déplacent entre les électrodes négative et positive via un conducteur d'ions et délivrent des électrons pour générer un courant électrique. Dans les batteries classiques, par exemple les batteries lithium-ion, le conducteur ionique est un composé organique liquide hautement combustible, ce qui constitue un inconvénient important.

Divers programmes de recherche et de développement ont permis de synthétiser une variété de composés afin de trouver des conducteurs solides performants pour remplacer les électrolytes liquides. Des chercheurs ont notamment découvert un électrolyte ionique à l'état solide dont les performances dépassent celles d'un électrolytes lithium-ion classique : l'électrolyte solide de sulfure LGPS (LGPS : lithium, germanium, phosphore, soufre).

Dans le contexte général des électrodes pour batteries, la capacité disponible, en particulier la capacité disponible en fonction de la puissance fournie, est un paramètre essentiel pour évaluer un dispositif incorporant ces électrodes, ainsi que la vitesse à laquelle il est possible de charger et de décharger la batterie. Il est bien connu dans la littérature que l'augmentation du courant de décharge/charge d'une batterie réduit la capacité que la batterie est capable de fournir (efficacité coulombienne).

Classiquement, afin de pallier ces inconvénients, le matériau actif peut être mélangé à un bon conducteur électronique (comme le carbone) ou incorporé dans une matrice conductrice. Dans ce cas, le matériau de la cathode est incorporé dans une matrice de carbone. EP3809491 est un exemple de cette approche. Comme le montre la figure 5 de ce document, la matrice de carbone réduit la perte de capacité à une densité de courant élevée.

La principale limitation de cette approche est la réduction de la capacité totale : une partie du volume est utilisée pour la matrice conductrice, qui n'offre aucune propriété de stockage. Par rapport à une électrode active à 100 %, la capacité sera réduite. En outre, cette approche n'est pas facilement applicable aux batteries à couches minces à l'état solide.

Un objectif de l'invention est ainsi de fournir des batteries notamment solides en couches minces, pour lesquelles la perte de capacité lors des cycles de charge/décharge, est réduite voire absente.

Un autre objectif de l'invention est ainsi de permettre d'obtenir de tels avantages notamment lors de la première charge, sur des batteries solides notamment en couches minces de type LiCoO₂.

Ainsi, l'invention concerne une batterie en couches solides, comprenant une couche conductrice électronique et ionique, séparant une couche d'électrolyte et une couche d'électrode, ladite couche conductrice électronique et ionique constituant ou faisant partie du collecteur de courant de l'électrode.

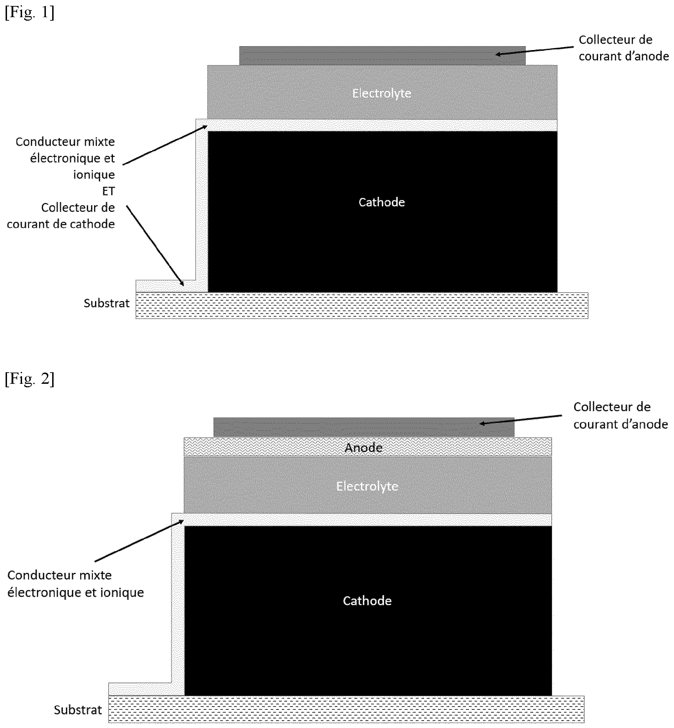

En particulier, ledit collecteur de courant de l'électrode comprend une première partie de collecteur étant ladite couche conductrice électronique et ionique, à l'interface électrode-électrolyte, ainsi qu'une deuxième partie de collecteur située d'un côté de l'électrode, comme illustré sur la figure 1.

Par « séparant la couche d'électrolyte et une couche d'électrode», on entend en particulier que la couche conductrice électronique et ionique est à la fois au contact de la couche d'électrolyte et d'une couche d'électrode, lesdites couche d'électrolyte et couche d'électrode n'étant pas en contact entre elles, ou, dans le cas d'une grille, notamment métallique, l'électrolyte et l'électrode sont en contact via les trous de la grille.

L'invention concerne également une batterie en couches solides, comprenant une couche conductrice électronique et ionique, entre une couche d'électrolyte et une couche d'électrode, ladite couche conductrice électronique et ionique faisant partie du collecteur de courant de l'électrode, et permettant un contact partiel entre l'électrolyte et l'électrode, éventuellement par l'intermédiaire d'un matériau conducteur ionique et optionnellement électronique.

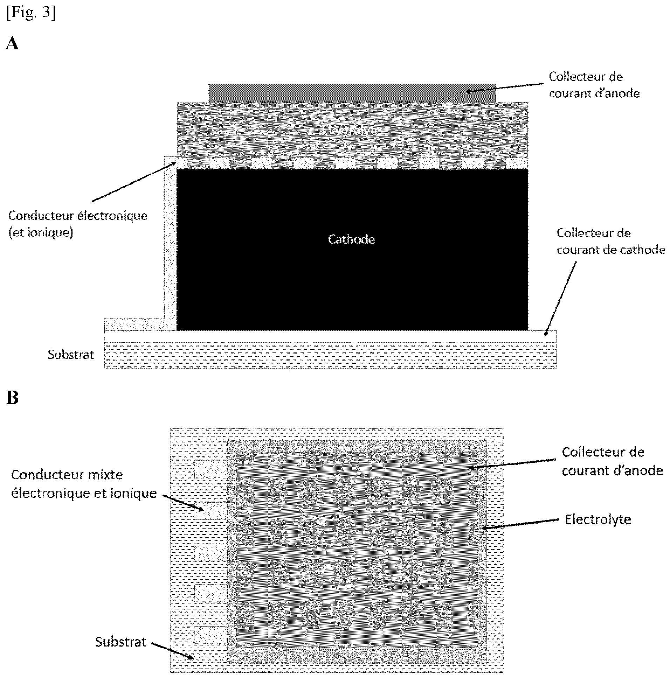

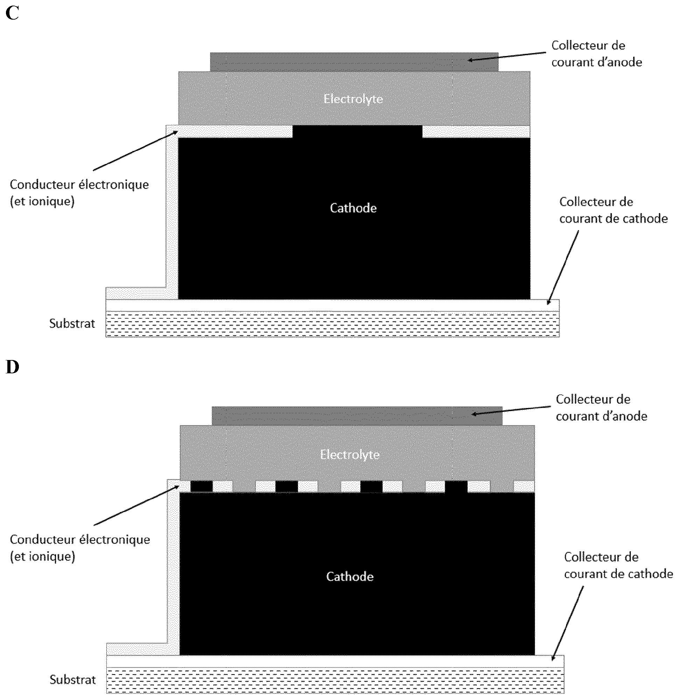

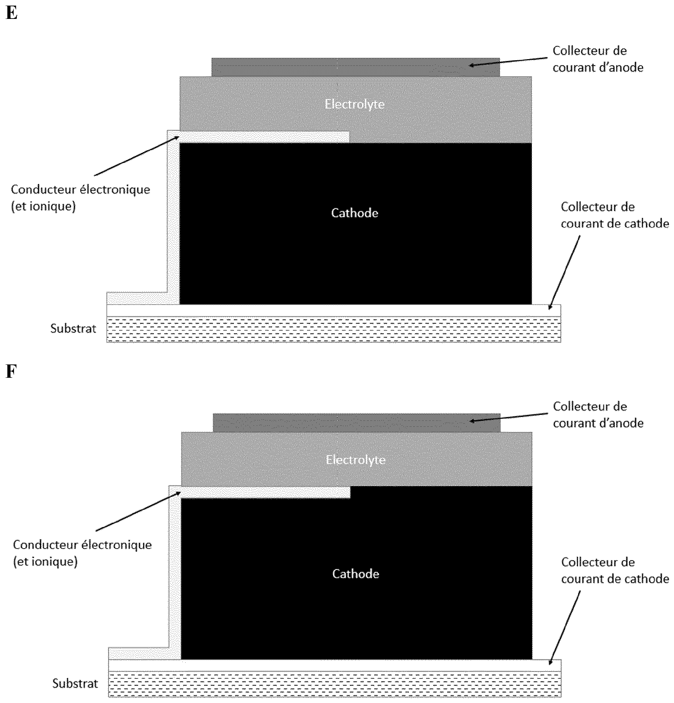

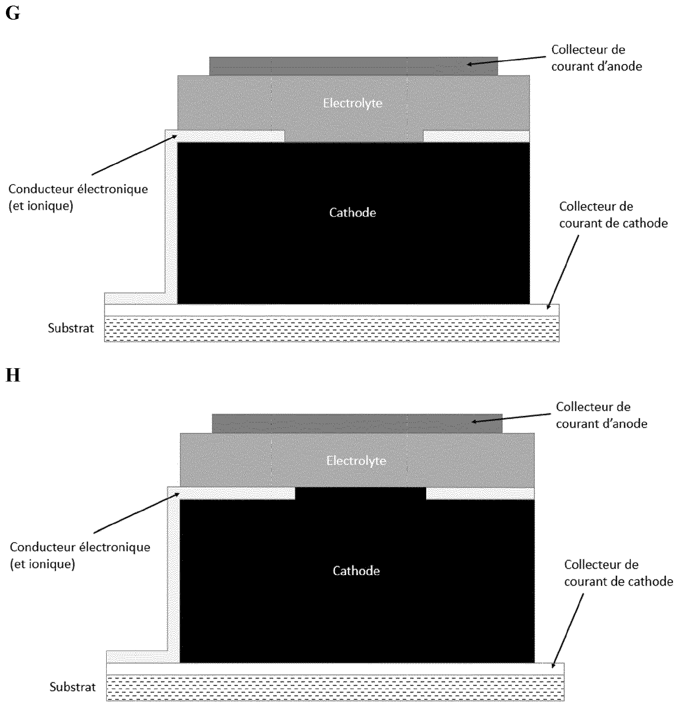

Ceci est par exemple illustré à la figure 3.

Par « matériau conducteur ionique » éventuellement présent, on entend notamment un matériau conducteur ionique autre que l'électrolyte tel que défini précédemment.

En cas d'absence dudit matériau conducteur ionique, c'est l'électrolyte qui joue le rôle du matériau conducteur ionique de la couche conductrice électronique et ionique.

Par « contact partiel », on entend notamment un contact dans au moins une zone de la couche électronique et ionique, ladite zone ne représentant pas la totalité de ladite couche électronique et ionique.

Ainsi, en particulier, la couche conductrice n'est pas continue.

Selon un mode de réalisation particulier, la surface de contact entre l'électrolyte et l'électrode, notamment cathodique, est d'au moins 10% de la surface totale de l'électrode, de préférence comprise entre 20 et 75% de la surface totale de l'électrode.

Ce contact se fait en particulier au niveau d'au moins une ouverture d'un matériau conducteur électronique de la couche électronique et ionique.

Par « au niveau d'au moins une ouverture d'un matériau conducteur électronique de la couche électronique et ionique », on entend notamment au moins une ouverture de la couche de matériau conducteur électronique, comprenant en son sein de l'électrolyte et/ou de l'électrode tels que définis précédemment.

Selon un mode de réalisation particulier, ladite au moins une ouverture comprend, en particulier uniquement, de l'électrolyte, de l'électrode cathodique, ou de l'électrolyte et de l'électrode tels que définis précédemment.

Selon un mode de réalisation particulier, ladite au moins une ouverture comprend, en particulier uniquement, de l'électrolyte, ou de l'électrolyte et de l'électrode tels que définis précédemment. Dans ce cas, l'électrolyte, notamment au sein de la au moins une ouverture, joue le rôle du matériau conducteur ionique de la couche conductrice électronique et ionique.

Selon un mode de réalisation particulier, ladite au moins une ouverture comprend, en particulier uniquement, de l'électrode telle que définie précédemment. Dans ce cas, l'électrolyte, notamment l'électrolyte au contact de l'électrode, joue le rôle du matériau conducteur ionique de la couche conductrice électronique et ionique.

L'invention concerne ainsi également une batterie en couches solides, comprenant une couche conductrice électronique, entre une couche d'électrolyte et une couche d'électrode, ladite couche conductrice électronique faisant partie du collecteur de courant de l'électrode, et permettant un contact partiel entre l'électrolyte et l'électrode, éventuellement par l'intermédiaire d'un matériau conducteur ionique et optionnellement électronique.

Ainsi, l'électrolyte, notamment l'électrolyte au contact de l'électrode, et éventuellement le matériau conducteur ionique joue(nt) le rôle de conducteur ionique.

Plus particulièrement, ladite couche conductrice électrique et ionique est constituée de ou comprend au moins un matériau conducteur électronique et au moins un matériau conducteur ionique, ledit matériau conducteur électronique comprenant au moins une ouverture, en particulier une pluralité d'ouvertures,
ladite couche conductrice électrique et ionique permettant un contact partiel entre l'électrolyte et l'électrode, éventuellement par l'intermédiaire d'un matériau conducteur ionique et optionnellement électronique.

Encore plus particulièrement, ladite couche conductrice électrique et ionique est constituée de ou comprend au moins un matériau conducteur électronique et au moins un matériau conducteur ionique, ledit matériau conducteur électronique comprenant au moins une ouverture, en particulier une pluralité d'ouvertures,
ladite couche conductrice électrique et ionique permettant un contact partiel entre l'électrolyte et l'électrode, éventuellement par l'intermédiaire d'un matériau conducteur ionique et optionnellement électronique, au niveau de ladite au moins une ouverture.

Encore plus particulièrement, ladite couche conductrice électrique et ionique est constituée de ou comprend au moins un matériau conducteur électronique et au moins un matériau conducteur ionique, ledit matériau conducteur électronique comprenant au moins une ouverture, en particulier une pluralité d'ouvertures,
ladite couche conductrice électrique et ionique permettant un contact partiel entre l'électrolyte et l'électrode, au niveau de ladite au moins une ouverture. Dans ce cas, le matériau conducteur ionique est l'électrolyte tel que défini précédemment.

Selon un mode de réalisation particulier, l'invention concerne une batterie en couches solides, comprenant une couche conductrice électronique et ionique, entre une couche d'électrolyte et une couche d'électrode cathodique,
ladite couche conductrice électronique et ionique faisant partie du collecteur de courant de l'électrode, et permettant un contact partiel entre l'électrolyte et l'électrode cathodique, éventuellement par l'intermédiaire d'un matériau conducteur ionique et optionnellement électronique.

Selon un mode de réalisation particulier, l'invention concerne une batterie en couches solides, comprenant une couche conductrice électronique et ionique, entre une couche d'électrolyte et une couche d'électrode,
ladite couche conductrice électronique et ionique faisant partie du collecteur de courant de l'électrode, et permettant un contact partiel entre l'électrolyte et la cathode, éventuellement par l'intermédiaire d'un matériau conducteur ionique.

Selon un mode de réalisation particulier, ladite couche conductrice électronique et ionique comprend au moins un matériau conducteur électronique et optionnellement ionique et au moins un matériau conducteur ionique et optionnellement électronique.

Selon un mode de réalisation particulier, ladite couche conductrice électronique et ionique comprend au moins un matériau conducteur électronique et optionnellement ionique et au moins un matériau conducteur ionique.

Selon un mode de réalisation particulier, ladite couche conductrice électronique et ionique comprend au moins un matériau conducteur électronique et au moins un matériau conducteur ionique.

Selon un mode de réalisation particulier, ledit matériau conducteur ionique est l'électrolyte tel que défini précédemment.

Selon un mode de réalisation particulier, ledit matériau conducteur électronique comprend au moins une ouverture, en particulier une pluralité d'ouvertures.

Selon un mode de réalisation particulier, ledit matériau conducteur électronique comprend au moins une ouverture, dans laquelle l'électrolyte et l'électrode, en particulier l'électrode cathodique, sont en contact, éventuellement par l'intermédiaire d'un matériau conducteur ionique et optionnellement électronique.

Selon un mode de réalisation particulier, ledit matériau conducteur électronique comprend au moins une ouverture, dans laquelle l'électrolyte et l'électrode, en particulier l'électrode cathodique, sont en contact, par l'intermédiaire d'un matériau conducteur ionique.

Ce matériau conducteur ionique est en particulier l'électrolyte tel que défini précédemment. Ainsi, dans ce cas, l'invention concerne plus particulièrement une batterie en couches solides, comprenant une couche conductrice électronique et ionique, entre une couche d'électrolyte et une couche d'électrode,
ladite couche conductrice électronique et ionique faisant partie du collecteur de courant de l'électrode, et comprenant un matériau conducteur électronique comprenant au moins une ouverture, permettant un contact partiel entre l'électrolyte et l'électrode.

Dans ce cas, c'est l'électrolyte qui joue le rôle du matériau conducteur ionique de la couche conductrice électronique et ionique.

Selon un mode de réalisation particulier, l'invention concerne une batterie en couches solides, comprenant une couche conductrice électronique et ionique, séparant une couche d'électrolyte d'une couche d'électrode cathodique,
ladite couche conductrice électronique et ionique faisant partie du collecteur de courant de la cathode.

La figure 1 représente une batterie selon la présente invention.

Selon un mode de réalisation particulier, l'invention concerne une batterie comprenant :
- un collecteur de courant d'anode, en contact avec une couche d'électrolyte ;
- une couche conductrice électronique et ionique, séparant la couche d'électrolyte d'une couche d'électrode cathodique ;
ladite couche conductrice électronique et ionique faisant partie du collecteur de courant de la cathode.

Selon un mode de réalisation particulier, l'invention concerne une batterie comprenant :
- un collecteur de courant d'anode, en contact avec une couche d'électrode anodique ;
- une couche d'électrolyte, en contact avec la couche d'électrode anodique ;
- une couche conductrice électronique et ionique, séparant la couche d'électrolyte d'une couche d'électrode cathodique ;
ladite couche conductrice électronique et ionique faisant partie du collecteur de courant de la cathode.

Par « séparant la couche d'électrolyte d'une couche d'électrode cathodique », on entend en particulier que la couche conductrice électronique et ionique est à la fois au contact de la couche d'électrolyte et de la couche d'électrode cathodique, lesdites couche d'électrolyte et couche d'électrode cathodique n'étant pas en contact entre elles, ou, dans le cas d'une grille, notamment métallique, l'électrolyte et la cathode sont en contact via les trous de la grille. Faisant partie du collecteur de courant de cathode, ladite couche conductrice électronique et ionique peut être liée au pôle positif de la batterie.

Selon un mode de réalisation particulier, l'invention concerne une batterie en couches solides, comprenant une couche conductrice électronique et ionique, séparant une couche d'électrolyte d'une couche d'électrode anodique,
ladite couche conductrice électronique et ionique faisant partie du collecteur de courant de l'anode.

L'électrode anodique peut par exemple être une électrode anodique d'insertion.

Faisant partie du collecteur de courant d'anode, ladite couche conductrice électronique et ionique peut être liée au pôle négatif de la batterie.

Les batteries de l'invention sont notamment des batteries en couches entièrement solides.

Il s'agit en particulier de batterie en couches minces solides, plus particulièrement de batterie en couches minces entièrement solides, lesquelles peuvent également être appelées batteries solides en couches minces, plus particulièrement de batterie entièrement solides en couches minces, respectivement.

Selon un mode de réalisation particulier, la couche conductrice électronique et ionique a une épaisseur de 10nm à 1 µm.

Selon un mode de réalisation particulier, la couche d'électrode cathodique a une épaisseur E de 1µm à 200µm.

Selon un mode de réalisation particulier, la couche conductrice électronique et ionique a une épaisseur de 10nm à E/2, E étant l'épaisseur de la couche d'électrode cathodique telle que décrite ci-dessus.

Selon un mode de réalisation particulier, l'invention concerne une batterie en couches minces dans laquelle :
- le collecteur de courant d'anode a une épaisseur comprise de 10nm à 10µm ; et/ou
- la couche d'électrode anodique a une épaisseur supérieure à 0 et inférieure ou égale à 200µm ; et/ou
- la couche d'électrolyte a une épaisseur comprise de 10nm à 10µm.
- la couche d'électrode cathodique a une épaisseur comprise de 1 µm à 200µm.
- la couche conductrice électronique et ionique a une épaisseur comprise entre 20 nm et 1µm.

Par « couche conductrice électronique », on entend que la couche laisse passer les électrons de la couche d'électrolyte vers la couche d'électrode cathodique, et de la couche d'électrode cathodique vers la couche d'électrolyte.

Selon un mode de réalisation particulier, ladite couche conductrice électronique et ionique a une conductivité électrique d'au moins 10⁻³ S.cm⁻¹. Par exemple, la conductivité électrique peut être de 10⁻³ à 10⁸ S.cm⁻¹.

Par « couche conductrice ionique », on entend que la couche laisse passer les ions, en particulier lithium, de la couche d'électrolyte vers la couche d'électrode cathodique, et de la couche d'électrode cathodique vers la couche d'électrolyte.

Selon un mode de réalisation particulier, ladite couche conductrice électronique et ionique a une conductivité ionique d'au moins 10⁻⁶ S.cm⁻¹. Par exemple, la conductivité ionique peut être de 10⁻⁸ à 10² S.cm⁻¹.

Selon un mode de réalisation particulier, ladite couche conductrice électronique et ionique est constituée de ou comprend au moins un matériau conducteur électronique et ionique.

Selon un mode de réalisation particulier, ladite couche conductrice électronique et ionique est constituée de ou comprend un matériau M choisi parmi :
- Les métaux éventuellement dopés, notamment choisi parmi Si, Sn, Al, As, éventuellement dopés, et leurs alliages ;
- Les matériaux à base de carbone, notamment choisi parmi les microbilles de mésocarbone (MCMB), le graphite pyrolytique hautement ordonné (HOPG), les carbones durs, les carbones « soft » ;
- LiTiO₂ (correspondant à l'état de TiO₂ après insertion du lithium) ; et/ou
- LiFePO₄.

Les métaux peuvent être dopés à B, As ou P. Le dopant est alors notamment présent à < 1% dans le métal ou dans ses alliages.

Selon un mode de réalisation particulier, ladite couche conductrice électronique et ionique contient le matériau M à hauteur de 95% à 100% en masse, plus particulièrement M à hauteur de 100% en masse. Par « à hauteur (...) en masse » on entend le pourcentage de la masse du matériau M dans la masse totale de la couche conductrice électronique et ionique.

Selon un mode de réalisation particulier, ladite couche conductrice électrique et ionique est constituée de ou comprend au moins un matériau conducteur électronique et au moins un matériau conducteur ionique. Une batterie de l'invention comprenant une telle couche est exemplifiée à la figure 2.

Selon un mode de réalisation plus particulier, ladite couche conductrice électronique et ionique est constituée de ou comprend un matériau conducteur électronique et un matériau conducteur ionique.

Ledit matériau conducteur électronique est notamment sous la forme d'une grille.

Par « grille », on entend notamment une couche ou plaque ajourée, ou un assemblage de fils ou barreaux entrecroisés ou parallèles.

Le (au moins un) matériau conducteur électronique peut être choisi parmi :
- Les métaux, par exemple Pt, W, Al, Cu, Au, ou Ti, notamment sous forme de grille.

Le matériau conducteur ionique est notamment un électrolyte, en particulier un électrolyte solide. Ces électrolytes sont bien connus dans la littérature.

Le (au moins un) matériau conducteur ionique peut être choisi parmi :
- Les électrolytes solides, notamment les LiPON (oxynitrure phosphorique de lithium, ou lithium phosphorus oxynitride), LLTO (lithium lanthanum titanate), LLZO (Li7La3Zr2O12), LPS (lithium phosphorus sulfide), LTP (lithium titanium phosphate), LZP (lithium zirconium phosphate), LiSiON (lithium-silicon-oxynitride), LAGP (lithium aluminium germanium phosphate), LGPS (lithium germanium phosphorus sulfide), et optionnellement à base de PEO (poly(éthylène oxide)), et en particulier l'électrolyte solide constituant ou compris dans la couche d'électrolyte de la présente batterie de l'invention.

La nature du collecteur de courant d'anode, de la couche d'électrode anodique, de la couche d'électrolyte, de la couche d'électrode anodique, bien connue de l'état de l'art, peut aisément être déterminées par l'homme du métier.

Par exemple :
- le collecteur de courant d'anode est constituée de ou comprend un matériau choisi parmi Ti, Pt, Cu, Al, Au, W, TiN, Si dopé, par exemple Ti ;
- la couche d'électrode anodique est constituée de ou comprend un matériau choisi parmi Li, Al, C, In₂O₃, Si, SnO₂, TiO₂, V₂O₅, étant par exemple Li;
- la couche d'électrolyte est constituée de ou comprend un matériau choisi parmi LiPON, LLTO, LLZO, LPS, LTP, LZP, LiSiON, LiN, LAGP, LGPS, à base de PEO, étant par exemple LiPON ; et/ou
- la couche d'électrode cathodique est constituée de ou comprend un matériau choisi parmi LiCoO₂, LiFePO₄, LiMn₂O₄, LiNiO₂, LiVsOs, LiMoO₃, LiV₂O₅, NMC, étant par exemple LiCoO₂. A titre d'exemples, des procédés d'obtention de telles couches sont notamment décrits dans Liu et al. (Advanced Materials, vol. 26, no. 37, pp. 6472-6477, 2014), Tadanaga et al. (Materials Research Bulletin, vol. 53, pp. 196-198, 2014), et Liu et al. (Electrochimica Acta, vol. 56, no. 3, pp. 1392-1398, 2011).

Selon un mode de réalisation particulier, l'anode et/ou la cathode de la batterie de l'invention est (sont) de type AAM (« All Active Material »).

Par « de type AAM », on entend notamment que l'électrode est dépourvue d'additifs non actifs.

Par "dépourvue", on entend notamment que l'électrode, notamment de la batterie en couche mince, contient moins de 5%, voire moins de 1%, par rapport à la masse totale de l'électrode, en masse d'additifs non actifs.

Selon un mode de réalisation particulier, la couche d'électrode cathodique est en outre au contact d'un substrat.

La nature du substrat, bien connue de l'état de l'art, peut aisément être déterminée par l'homme du métier.

Le substrat est par exemple constitué de ou comprend un matériau étant SiO₂ ou le Si.

Selon un mode de réalisation plus particulier, le substrat est conductif.

Selon un mode de réalisation particulier, la batterie en couches solides comprend en sus un élément de collecteur de courant entre le substrat et l'électrode. Dans ce cas, cet élément fait en particulier partie, tout comme la couche conductrice électronique et ionique, du collecteur de courant de l'électrode.

Selon un mode de réalisation particulier, la couche de collecteur de courant d'anode est en outre au contact d'une couche de passivation.

La nature de cette couche de passivation, bien connue de l'état de l'art, peut aisément être déterminée par l'homme du métier.

La couche de passivation est par exemple constituée de ou comprend un matériau étant du parylène (PPX).

Selon un mode de réalisation plus particulier, la couche de collecteur de courant d'anode est en outre au contact d'une couche de passivation, lesdites couche de collecteur de courant d'anode et couche de passivation étant également au contact d'une couche de redistribution (également connue sous le nom de couche de reprise de contact ou RDL).

La couche de redistribution est par exemple constituée de ou comprend un matériau étant du titane.

Ainsi, une batterie selon l'invention comprend par exemple un empilement dans l'ordre indiqué ci-après :
- couche d'électrode cathodique ;
- couche conductrice électronique et ionique faisant partie du collecteur de courant de la cathode ;
- couche d'électrolyte ; et
- collecteur de courant d'anode ;
ou un empilement dans l'ordre indiqué ci-après :
- couche d'électrode cathodique ;
- couche conductrice électronique et ionique faisant partie du collecteur de courant de la cathode ;
- couche d'électrolyte ;
- couche d'électrode anodique ; et
- collecteur de courant d'anode ;
ou un empilement dans l'ordre indiqué ci-après :
- substrat ;
- couche d'électrode cathodique ;
- couche conductrice électronique et ionique faisant partie du collecteur de courant de la cathode ;
- couche d'électrolyte ;
- couche d'électrode anodique ; et
- collecteur de courant d'anode ;
ou un empilement dans l'ordre indiqué ci-après :
- substrat ;
- couche d'électrode cathodique ;
- couche conductrice électronique et ionique faisant partie du collecteur de courant de la cathode ;
- couche d'électrolyte ;
- couche d'électrode anodique ;
- collecteur de courant d'anode ; et
- couche de passivation et couche de redistribution.

D'autres couches peuvent être interposées entre la cathode (couche d'électrode cathodique ) et le collecteur frontal (la couche conductrice électronique et ionique faisant partie du collecteur de courant de la cathode), et/ou entre le collecteur frontal et l'électrolyte (couche d'électrolyte). De telles couches sont illustrées à la figure 3.

Ces couches sont susceptibles de contribuer à l'amélioration des performances chimiques (empêcher la dégradation chimique) et physiques (améliorer l'adhérence et l'homogénéité du flux de lithium).

Des exemples de telles couches sont notamment :
- C, In₂O₃, Li_{1.2}Mn_{0.6}Ni_{0.2}O₂, Al₂O₃, ZrO₂, AlPO₄ comme décrit dans Y. Lyu et al., Advanced Energy Materials, vol. 11, n° 2, p. 2000982, 2021; G. Hu, J. Cao, Z. Peng, Y. Cao, et K. Du, Electrochimica Acta, vol. 149, p. 49-55, déc. 2014.
- Revêtement du LiCoO₂ sous forme de poudre par Li₄Ti₅O₁₂, Li₂TiO₃, TiO₂ comme décrit dans Z. Li et al., J. Power Sources, vol. 541, p. 231703, sept. 2022.
- LTO, LLZO, LiTaOs, LiAlO₂, LiNbO₃, NASICON, etc. comme décrit dans A. Banerjee et al., Chem. Rev., vol. 120, n° 14, p. 6878-6933, juill. 2020.

L'épaisseur de telles couches sont comprises entre 1nm et 50nm.

Selon un autre aspect, l'invention concerne également un procédé de préparation d'une batterie telle que définie précédemment, lequel comprend une étape de dépôt de la couche conductrice électronique et ionique sur la couche d'électrode cathodique.

Ce dépôt peut être réalisé par des techniques bien connues de l'homme du métier, notamment par des techniques de dépôt de couches minces, par exemple,
- par épitaxie de couche atomique (gravure de couches atomiques ou ALE pour «atomic layer etching »),
- par dépôt de couches minces atomiques ou ALD,
- par dépôt de couches par évaporation,
- par dépôt de couches par pulvérisation cathodique ou sputtering,
- par dépôt de couches par électrodéposition.

Les autres éléments de la batterie peuvent être mis en place selon l'une des techniques bien connues de l'homme du métier, décrites par exemple par {A.C. Kozen et al., Chem. Mater. 2015, 27, 15, 5324-5331 ; EMF Vieira et al., E.M.F. Vieira et al., J. Phys. D: Appl. Phys., 2016, 49, 48, 5301 ( ; WO 2008019398A1}.

Selon un autre aspect, l'invention concerne également l'utilisation d'une batterie selon l'invention, en tant que batterie solide, en particulier en tant que microbatterie solide intégrée, pour alimenter un dispositif électrique, notamment portable.

Ce dispositif est par exemple un dispositif (bio)médical, notamment un dispositif (bio)médical implantable, ou un dispositif électronique de loisir, notamment un dispositif de réalité augmentée.

### DEFINITIONS

Tel qu'on l'entend ici, les plages de valeur sous forme de « x-y » ou « de x à y » ou « entre x et y » incluent les bornes x et y, ainsi que les entiers compris entre ces bornes. A titre d'exemple, « 1-5 », ou « de 1 à 5 » ou « entre 1 et 5 » désignent notamment les entiers 1, 2, 3, 4 et 5. Les modes de réalisations préférés incluent chaque entier pris individuellement dans la plage de valeur, ainsi que toute sous-combinaison de ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'on l'utilise dans la présente description, le terme « environ » se réfère à un intervalle de valeurs de ± 10 % d'une valeur spécifique. A titre d'exemple, l'expression « environ 20 » comprend les valeurs de 20 ± 10 %, soit les valeurs de 18 à 22.

Au sens de la présente description, les pourcentages se réfèrent à des pourcentages en masse par rapport à la masse totale de la formulation, sauf indication contraire.

Par couche, on entend notamment une strate d'éléments superposés ou empilés.

### FIGURES

La **figure 1** illustre une vue en coupe transversale d'une batterie étant obtenue selon les exemples de la présente demande.
La **figure 2** illustre une vue en coupe transversale d'une batterie étant obtenue selon les exemples de la présente demande, dans laquelle est représentée l'anode.
La **figure 3** illustre une batterie dont la couche conductrice électronique et ionique est constituée de ou comprend un matériau conducteur électronique (une grille métallique, par exemple Pt) et un matériau conducteur ionique (électrolyte solide, par exemple LiPON). A et C à H : vue en coupe transversale de batteries dans lesquelles la couche conductrice électronique n'est pas continue. B : vue de dessus de ladite couche selon A.

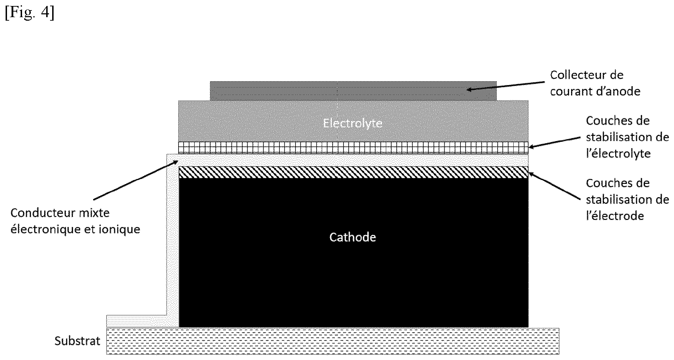

La **figure 4** illustre une vue en coupe transversale d'une batterie selon l'invention comprenant deux couches de stabilisation, l'une entre la cathode (couche d'électrode cathodique ) et le collecteur frontal (la couche conductrice électronique et ionique faisant partie du collecteur de courant de la cathode), et l'autre entre le collecteur frontal et l'électrolyte (couche d'électrolyte).

### EXEMPLES

Une batterie solide en couches minces, selon l'invention, est préparée comme suit.

Une couche de TiO₂ amorphe de 100 nm d'épaisseur (collecteur de courant de cathode) est déposée par ALD sur une couche de cathode de LiCoO₂ de 20µm d'épaisseur. Une couche d'électrolyte de type LIPON (1 µm d'épaisseur) et un collecteur de courant d'anode en Ti sont ajoutés pour obtenir la partie active de la batterie.

Les autres éléments de la batterie (support : SiO₂, couche de passivation : PPX, couche de reprise de contact : Ti), ont été mis en place comme connue de l'homme du métier.

Le gain de capacité à 1mA.cm⁻² est d'environ + 0,4mA.cm⁻², soit un gain de +50% par rapport à l'art antérieur (collecteur de courant placé sous la couche de cathode, laquelle est également en contact avec la couche d'électrolyte.

En outre, la rétention de la capacité est bien plus stable : perte de 10 % seulement entre 0,1 et 10 mA.cm⁻² contre 30 % pour l'art antérieur.

La **figure 1** illustre un exemple de batterie pouvant ainsi être obtenue.

## Revendications

1. Batterie en couches solides, comprenant une couche conductrice électronique et ionique, entre une couche d'électrolyte et une couche d'électrode,
ladite couche conductrice électronique et ionique faisant partie du collecteur de courant de l'électrode, et permettant un contact partiel entre l'électrolyte et l'électrode, éventuellement par l'intermédiaire d'un matériau conducteur ionique et optionnellement électronique.

2. Batterie selon la revendication 1, comprenant :
- un collecteur de courant d'anode, en contact avec une couche d'électrolyte ;
- une couche conductrice électronique et ionique, séparant la couche d'électrolyte d'une couche d'électrode cathodique ;
ladite couche conductrice électronique et ionique faisant partie du collecteur de courant de la cathode.

3. Batterie selon la revendication 1, comprenant :
- un collecteur de courant d'anode, en contact avec une couche d'électrode anodique ;
- une couche d'électrolyte, en contact avec la couche d'électrode anodique ;
- une couche conductrice électronique et ionique, séparant la couche d'électrolyte d'une couche d'électrode cathodique ;
ladite couche conductrice électronique et ionique faisant partie du collecteur de courant de la cathode.

4. Batterie selon l'une quelconque des revendications précédentes, dans laquelle la couche conductrice électronique et ionique a une épaisseur de 10nm à 1µm.

5. Batterie selon l'une quelconque des revendications précédentes, dans laquelle la couche d'électrode cathodique a une épaisseur E de 1µm à 200µm.

6. Batterie selon l'une quelconque des revendications précédentes, dans laquelle la couche conductrice électronique et ionique a une épaisseur de 10nm à E/2, E étant l'épaisseur de la couche d'électrode cathodique telle que décrite dans la revendication 5.

7. Batterie selon l'une quelconque des revendications précédentes, dans laquelle ladite couche conductrice électronique et ionique comprend un matériau conducteur électrique et ionique, choisi parmi :
- Les métaux éventuellement dopés, choisi parmi Si, Sn, Al, As, éventuellement dopés, et leurs alliages ;
- Les matériaux à base de carbone, choisi parmi les microbilles de mésocarbone (MCMB), le graphite pyrolytique hautement ordonné (HOPG), les carbones durs, les carbones « soft » ;
-
LiTiO₂ ;
et/ou
-
LiFePO₄.

8. Batterie selon l'une quelconque des revendications 1 à 6, dans laquelle ladite couche conductrice électronique et ionique comprend au moins un matériau conducteur électronique et au moins un matériau conducteur ionique,
le au moins un matériau conducteur électronique étant choisi parmi les métaux Pt, W, Al, Cu, Au, et Ti, notamment sous forme de grille, et/ou
le au moins un matériau conducteur ionique étant choisi parmi les électrolytes solides les LiPON, LLTO, LLZO, LPS, LTP, LZP, LiSiON, LAGP, LGPS, et optionnellement à base de PEO, et l'électrolyte solide constituant ou compris dans la couche d'électrolyte telle que définie à la revendication 1.

9. Procédé de préparation d'une batterie selon l'une quelconque des revendications 1 à 8, lequel comprend une étape de dépôt de la couche conductrice électronique et ionique sur la couche d'électrode cathodique.

10. Procédé selon la revendication 9, l'étape de dépôt est réalisé par épitaxie de couche atomique.
